(19) Europäisches Patentamt / European Patent Office / Office européen des brevets

(11) **EP 1 622 288 B1**

(12) **EUROPEAN PATENT SPECIFICATION**

(45) Date of publication and mention
of the grant of the patent:
**24.10.2012 Bulletin 2012/43**

(51) Int Cl.:
*H04B 7/04* (2006.01)    *H04L 27/26* (2006.01)
*H04L 25/02* (2006.01)

(21) Application number: **05016006.8**

(22) Date of filing: **22.07.2005**

(54) **Pilot symbol transmission for multiple-transmit communication systems**

Übertragung von Pilotsymbolen für mehrere Sendekommunikationssysteme

Transmission de symboles pilotes pour systèmes de communication à émission multiple

(84) Designated Contracting States:
**DE FR GB**

(30) Priority: **27.07.2004 US 591096 P**
**08.12.2004 US 634101 P**

(43) Date of publication of application:
**01.02.2006 Bulletin 2006/05**

(73) Proprietor: **Broadcom Corporation**
**Irvine, CA 92617 (US)**

(72) Inventors:
• **Moorti, Rajendra Tushar**
**Mountain Drive**
**California 94043 (US)**

• **Gaikwad, Rohit V.**
**San Diego**
**California 92127 (US)**

(74) Representative: **Jehle, Volker Armin et al**
**Bosch Jehle Patentanwaltsgesellschaft mbH**
**Flüggenstrasse 13**
**80639 München (DE)**

(56) References cited:
**EP-A- 1 249 980**

• **BARRY J R ET AL: "Broadband MIMO-OFDM Wireless Communications", PROCEEDINGS OF THE IEEE, IEEE. NEW YORK, US, vol. 92, no. 2, 1 February 2004 (2004-02-01), pages 271-294, XP011107745, ISSN: 0018-9219, DOI: 10.1109/JPROC.2003.821912**

**Description**

BACKGROUND OF THE INVENTION

Field of the Invention

This invention relates to identification of transmission sources and coherent detection in multiple-transmit communication systems.

Description of the Related Art

Wireless communications systems enable various types of communications. One type of wireless communication between a single transmitter and a single receiver is known as a single-output-single-input (SISO) communication. The transmitter includes one antenna for transmitting radiofrequency (RF) signals, which are received by one or more antennas of the receiver. When the receiver includes two or more antennas, the receiver selects one of antennas to receive the incoming RF signals. Another type of wireless communication is a multiple-input-multiple-output (MIMO) communication. In a MIMO wireless communication, the transmitter and the receiver each includes multiple paths. In such a communication, the transmitter parallel processes data using a spatial and time encoding function to produce two or more streams of data. The transmitter includes multiple transmission paths to convert each stream of data into multiple RF signals. The receiver receives the multiple RF signals via multiple receiver paths that recapture the streams of data utilizing a spatial and time decoding function. The recaptured streams of data are combined and subsequently processed to recover the original data.

Different wireless devices in a wireless communication system may be compliant with different standards or different variations of the same standard. For example, IEEE™ 802.11a, an extension of the IEEE™ 802.11 standard, provides up to 54 Mbps in the 5GHz band. IEEE™ 802.11g, another extension of the 802.11 standard, provides 20+ Mbps in the 2.4 GHz band. Devices implementing both the 802.11a and 802.11g standards use an orthogonal frequency division multiplexing (OFDM) encoding scheme. OFDM is a frequency division multiplexing modulation technique for transmitting large amounts of digital data over a radio wave. OFDM works by spreading a single data stream over a band of sub-carriers, each of which is transmitted in parallel. In 802.11a and 802.11g compliant devices as defined in the IEEE™ standards, only 52 of the 64 active sub-carriers are used. Four of the active sub-carriers are pilot sub-carriers which include known pilot symbols that allow for channel, frequency and/or phase tracking at a receiving station. The remaining 48 sub-carriers provide separate wireless pathways for sending information in a parallel fashion.

Current pilot transmissions apply to single transmit chains. In order for the pilot signals to be useful across a variety of channel realizations, the same pilot signals should not be used on all transmit paths. Therefore, there exists a need for pilot symbols to be transmitted across multiple transmit sources or multiple transmitters.

Document, BARRY J R ET AL: "Broadband MIMO-OFDM Wireless Communications", PROCEEDINGS OF THE IEEE, IEEE. NEW YORK, US, vol. 92, no. 2, 1 February 2004 (2004-02-01), pages 271-294, XP011107745, ISSN: 0018-9219, DOI: 10.1109/JPROC.2003.821912 discloses the preamble of claims 1,4.

It is an object of the present invention to simplify in communication systems utilizing multiple transmit sources or multiple transmitters the use of known pilot symbols to identify multiple transmit sources.

This object is achieved by the device of claim 1 and the method of claim 4. Preferred embodiments of the present invention are determined in the dependent claims.

According to one aspect, there is provided a network device for transmitting a set of known pilot symbols in a communications system. The network device includes generating means for generating the set of known pilot symbols to be transmitted for each of a plurality of transmit sources and inserting means for inserting pilot symbols into sub-carriers for each of the plurality of transmit sources. The network device also includes creating means for creating a near to full orthogonal matrix over time and frequency using a minimum number of pilot symbols. The pilot symbols are used for at least one of channel, frequency, and phase tracking at a receiving station.

According to another aspect, there is provided a method for transmitting a set of known pilot symbols in a communications system. The method includes the steps of generating the set of known pilot symbols to be transmitted for each of the plurality of transmit sources and inserting pilot symbols for each of the plurality of transmit sources. The method also includes the steps of creating a near to full orthogonal matrix over time and frequency using a minimum number of pilot symbols and using the pilot symbols for at least one of channel, frequency, and phase tracking at a receiving station. According to a further aspect, a network device for transmitting a set of known pilot symbols in a communications system is provided, the network device comprising:

    generating means for generating the set of known pilot symbols to be transmitted for each of a plurality of transmit sources;
    inserting means for inserting pilot symbols into sub-carriers for each of the plurality of transmit sources; and
    creating means for creating a near to full orthogonal matrix over time and frequency;
    wherein a receiving station utilizes the pilot symbols for at least one of channel, frequency, and phase tracking.

Advantageously, the inserting means inserts weighted pilot symbols for each of the plurality of transmit sources.

Advantageously, when the plurality of transmit sources comprises two transmit sources and two known pilot symbols are sent per transmit source, where n is equal to an integer, for symbols 2n-1, the plurality of transmit sources send a value in vector $p_1$ on pilot set 1, and in vector $p_2$ on pilot set 2; and for symbols 2n the plurality of transmit sources send a value in vector $p_2$ on pilot set 1, and in vector $p_1$ on pilot set 2, wherein $p_1$ is equal to +1, +1 and $p_2$ is equal to +1, -1.

Advantageously, when the plurality of transmit sources comprises three transmit sources and two known pilot symbols are sent per transmit source, where n is equal to an integer, for symbols 2n-1, the plurality of transmit sources send a value in vector $p_1$ on pilot 1, if n is even; in vector $p_2$ on pilot 1, if n is odd, in vector $p_2$ on pilot 2 if n is odd and in vector $p_1$ on pilot 2 if n is even; and for symbols 2n the plurality of transmit sources send a value in vector $p_3$ on pilot 1, if n is odd, in vector $p_4$ on pilot 1 if n is even, in pilot $p_4$ on pilot 2 if n is odd and in vector $p_3$ on pilot 2 if n is even, wherein $p_1$ is equal to +1, +1, -1, $p_2$ is equal to +1, -1, +1, $p_3$ is equal to -1, +1, +1 and $p_4$ is equal to -1, -1, -1.

Advantageously, when the plurality of transmit sources comprises four transmit sources and two known pilot symbols are sent per transmit source, where n is equal to an integer, for symbols 2n-1, the plurality of transmit sources send a value in vector $p_1$ on pilot 1, if n is odd; in vector $p_2$ on pilot 1, if n is even, in vector $p_2$ on pilot 2 if n is odd and in vector $p_1$ on pilot 2 if n is even; and for symbols 2n the plurality of transmit sources send a value in vector $p_3$ on pilot 1 if n is odd, in vector $p_4$ on pilot 1 if n is even, in pilot $p_4$ on pilot 2 if n is odd and in vector $p_3$ on pilot 2 if n is even, wherein $p_1$ is equal to +1, +1, +1, -1, $p_2$ is equal to +1, +1, -1, +1, $p_3$ is equal to +1, -1, +1, +.1 and $p_4$ is equal to -1, +1, +1 +1.

Advantageously, the generating means is configured to generate four known pilot symbols to be transmitted for each of a plurality of transmit sources, wherein the four known pilot symbols are transmitted in one time period.

Advantageously, polarities of the known pilot symbols is inverted for varying transmitters to properly identify a source for each of the know pilot symbols.

Advantageously, the network device further comprises sending means for sending the pilots in subsets over time when there are fewer pilots than transmitters.

Advantageously, the network device is configured to use any subset of generated pilots sets.

Advantageously, a set of eight pilot symbols are transmitted for each of the plurality of transmit sources, wherein pilot sets are cycled over symbols for robustness across various channels.

Advantageously, the set of pilot symbols for each of the plurality of transmit sources is rotated across a pilot index over a period of time.

Advantageously, the set of pilot symbols is swapped every symbol when the plurality of transmit sources is equal to two to maintain robustness to channels.

Advantageously, the set of pilot symbols is swapped every pair of symbols when the plurality of transmit sources is equal to three or four to maintain robustness to channels.

Advantageously, for a given pilot number, pilot sets can contain at most one weighting which has an opposite polarity to the other pilot sets.

Advantageously, the inserting means inserts scaled pilot symbols for each of the plurality of transmit sources.

Advantageously, the inserting means performs at least one of reordering or permutation of pilot symbols across the plurality of transmit sources and across pilot indices.

Advantageously, the inserting means inserts scaled pilot symbols for each of the plurality of transmit sources, wherein the pilot symbols for each pilot set is scaled by a complex value which varies over time.

Advantageously, the inserting means inserts scaled pilot symbols for each of the plurality of transmit sources, wherein the pilot symbols within each pilot set is scaled by different complex values which varies over time.

According to a further aspect, a method for transmitting a set of known pilot symbols in a communications system is provided, the method comprising the steps of:

> generating the set of known pilot symbols to be transmitted for each of a plurality of transmit sources;
> inserting pilot symbols into sub-carriers for each of the plurality of transmit sources;
> creating a near to full orthogonal matrix over time and frequency using a minimum number of pilot symbols; and
> using the pilot symbols for at least one of channel, frequency, and phase tracking at a receiving station.

Advantageously, the step of inserting comprises inserting weighted pilot symbols for each of the plurality of transmit sources.

Advantageously, the step of inserting comprises inserting scaled pilot symbols for each of the plurality of transmit sources.

Advantageously, the step of inserting comprises performing at least one of reordering or permutation of pilot symbols across the plurality of transmit sources and across pilot indices.

Advantageously, the step of inserting comprises inserting scaled pilot symbols for each of the plurality of transmit sources, wherein the pilot symbols for each pilot set is scaled by a complex value which varies over time.

BRIEF DESCRIPTION OF THE DRAWINGS

The accompanying drawings, which are included to provide a further understanding of the invention and are incorporated in and constitute a part of this specification, illustrate embodiments of the invention that together with the description serve to explain the principles of the invention, wherein:

Figure 1 illustrates a communication system that includes a plurality of base stations, a plurality of wireless communication devices and a network hardware component;

Figure 2a illustrates an example of a two transmitter pilot specification for situations where there are two transmitters and when two pilots are to be sent per transmitter;

Figure 2b illustrates an example of a three transmitter pilot specification for situations where there are three transmitters and when two pilots are to be sent per transmitter;

Figure 2c illustrates an example of a four transmitter pilot specification for situations where there are four transmitters and when two pilots are to be sent per transmitter;

Figure 3a illustrates the case when four pilots are to be transmitted for one transmitter;

Figure 3b illustrates the case when four pilots are to be transmitted for two transmitters;

Figure 3c illustrates the case when four pilots are to be transmitted for three transmitters;

Figure 3d illustrates the case when four pilots are to be transmitted for four transmitters;

Figure 4a illustrates the case when eight pilots are to be transmitted for one transmitter;

Figure 4b illustrates the case when eight pilots are to be transmitted for two transmitters;

Figure 4c illustrates the case when eight pilots are to be transmitted for three transmitters;

Figure 4d illustrates the case when eight pilots are to be transmitted for four transmitters;

Figure 5a illustrates an example of a matrix where the pilot sets are swapped every symbol for two transmitters to maintain robustness;

Figure 5b illustrates an example of a matrix where the pilot sets are swapped every pair symbols for three transmitters to maintain robustness; and

Figure 5c illustrates an example of a matrix where the pilot sets are swapped every pair symbols for four transmitters to maintain robustness.

DETAILED DESCRIPTION OF THE PREFERRED EMBODIMENTS

Reference will now be made to the preferred embodiments of the present invention, examples of which are illustrated in the accompanying drawings.

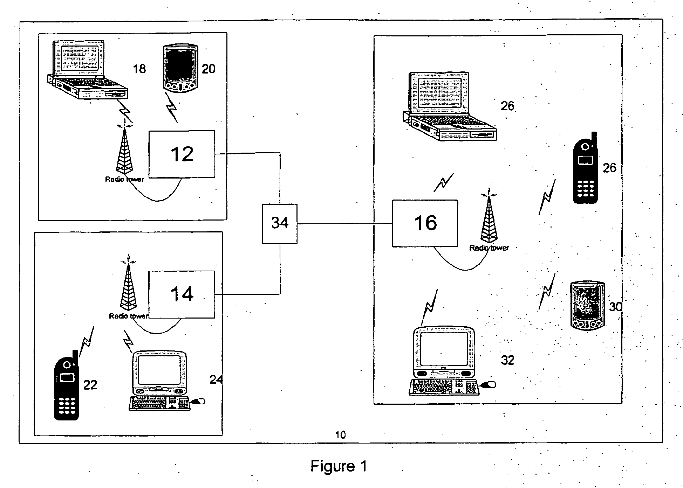

Figure 1 illustrates a communication system 10 that includes a plurality of base stations and/or access points 12-16, a plurality of wireless communication devices 18-32 and a network hardware component 34. Wireless communication devices 18-32 may be laptop computers 18 and 26, personal digital assistant hosts 20 and 30, personal computer 24 and 32 and/or cellular telephone 22 and 28. Base stations or access points 12-16 are operably coupled to network hardware 34 via local area network connections 36, 38 and 40. Network hardware 34, for example a router, a switch, a bridge, a modem, or a system controller, provides a wide area network connection for communication system 10. Each of base stations or access points 12-16 has an associated antenna or antenna array to communicate with the wireless communication devices in its area. Typically, the wireless communication devices register with a particular base station or access point 12-14 to receive services from communication system 10. Each wireless communication device includes a built-in radio or is coupled to an associated radio. The radio includes at least one radio frequency (RF) transmitter and at least one RF receiver.

Each wireless communication device participating in wireless communications includes a built-in radio transceiver (i.e., receiver and transmitter) or is coupled to an associated radio transceiver. As is known to those skilled in the art, the transmitter typically includes a data modulation stage, one or more intermediate frequency stages, and a power amplifier. The data modulation stage converts raw data into baseband signals in accordance with a particular wireless communication standard. The intermediate frequency stages mix the baseband signals with one or more local oscillations to produce RF signals. The power amplifier amplifies the RF signals prior to transmission via an antenna.

The receiver is typically coupled to the antenna and includes a low noise amplifier, one or more intermediate frequency stages, a filtering stage, and a data recovery stage. The low noise amplifier receives, via the antenna, inbound RF signals and amplifies the inbound RF signals. The intermediate frequency stages mix the amplified RF signals with one or more local oscillations to convert the amplified RF signal into baseband signals or intermediate frequency (IF) signals. The filtering stage filters the baseband signals of the IF signals to attenuate unwanted out of band signals to produce filtered signals. The data recovery stage recovers raw data from the filtered signals in accordance with a particular wireless communication standard.

According to an embodiment of the invention, a set of known pilot symbols are used to identify multiple transmit sources. The known pilot signals/symbols or multiples of known signals can be inserted into a data stream. As such, the invention is related to pilot symbol transmissions for communication systems utilizing multiple transmit sources or multiple transmitters and to a method of utilizing known pilot symbols to identify multiple transmit sources. The pilot symbols are used for multiple transmit stream communications and allow for channel, frequency and/or phase tracking at a receiving station. Therefore, pilots in one embodiment of the invention are selected to provide good performance across different types of channels.

An embodiment of the present invention creates near-to-full orthogonal matrices over time and frequency.

The invention also allows for correction of uncorrelated phase noise across transmitters and symbols. As shown below, when there are fewer pilots than transmitters, the pilots can be sent in subsets over time. Embodiments of the invention utilize the insertion of weighted pilot symbols for situations where there are various transmitters. For example, signals can have polarities inverted with respect to varying transmitters, or other configurations, to properly identify the source of a particular signal.

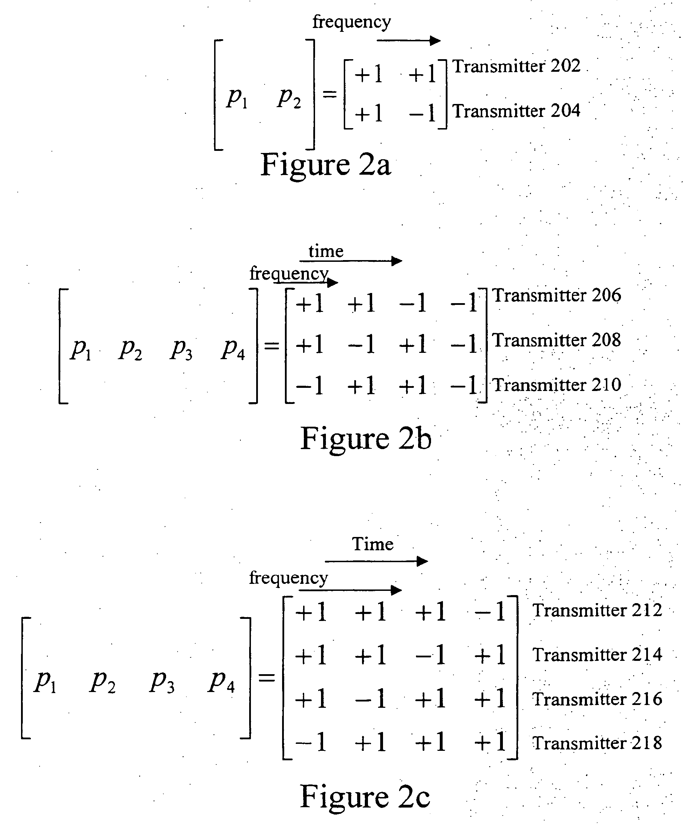

In the situation of a two transmitter pilot specification when two pilots are to be sent per transmitter, when n = 1,2, etc, for symbols 2n-1, transmitters 1-2 send the values in vector $p_1$, as shown in figure 2a, on pilot #1 in sub-carrier #-21 and in vector $p_2$ on pilot #2 in sub-carrier #21. Where n = 1, 2, etc, for symbols 2n, transmitters 1-2 send the values in vector $p_2$ on pilot #1 in sub-carrier #-21 and in vector $p_1$ on pilot #2 in sub-carrier #21. According to this embodiment, the phase noise correction bandwidth for two transmitters remains at $1/T_{sym}$. Phase error can be uncorrelated from symbol to symbol. Figure 2a illustrates an example of a two transmitter pilot specification for situations where there are two transmitters 202-204 and when two pilots are to be sent per transmitter. As shown in figure 2a, transmitter 202 transmits the values [+1 +1] in one symbol in one time period and transmitter 204 transmits the values [+11] in one symbol in one time period.

In the situation of a three transmitter pilot specification when two pilots are to be sent per transmitter, when n = 1, 2, etc, for symbols 2n-1, transmitters 1-3 send the values in vector $p_1$, as shown in figure 2c, on pilot #1 in sub-carrier #-21, if n is odd; in vector $p_2$ on pilot #1 in sub-carrier #-21, if n is even; in vector $p_2$ on pilot #2 in sub-carrier #+21, if n is odd and in vector $p_1$ on pilot #2 in sub-carrier #+21, if n is even. Where n = 1, 2, etc, for symbols 2n, transmitters 1-3 send the values in vector $p_3$, as shown in figure 2b, on pilot #1 in sub-carrier #-21, if n is odd; in vector $p_4$ on pilot #1 in sub-carrier #-21, if n is even; in vector $p_4$ on pilot #2 in sub-carrier #+21, if n is odd and in vector $p_3$ on pilot #2 in sub-carrier #+21, if n is even. Figure 2b illustrates an example of a three transmitter pilot specification for situations where there are three transmitters 206-210 and when two pilots are to be sent per transmitter in each time period. As shown in figure 2b, transmitter 206 transmits the values [+1 +1] in a first symbol in a first time period and the values [-1 -1] in a second symbol in a second time period. Similarly, transmitter 208 transmits the values [+1 -1] in the first symbol in the first time period and the values [+1 -1] in the second symbol in the second time period. Transmitter 210 transmits the values [-1 +1] in the first symbol in the first time period and the values [+1-1] in the second symbol in a second time period.

In the situation of a four transmitter pilot specification when two pilots are to be sent per transmitter, when n = 1, 2, etc, for symbols 2n-1, transmitters 1-4 send the values in vector $p_1$, as shown in figure 2c, on pilot #1 in sub-carrier #-21, if n is odd; in vector $p_2$ on pilot #1 in sub-carrier #-21, if n is even; in vector $p_2$ on pilot #2 in sub-carrier #+21, if n is odd; and in vector $p_1$ on pilot #2 in sub-carrier #+21, if n is even. Where n = 1, 2, etc, for symbols 2n, transmitters 1-4 send the values in vector $p_3$ on pilot #1 in sub-carrier #-21, if n is odd; in vector $p_4$ on pilot #1 in sub-carrier #-21, if n is even; in vector $p_4$ on pilot #2 in sub-carrier #+21, if n is odd and in vector $p_3$ on pilot #2 in sub-carrier #+21, if n is even. Figure 2c illustrates an example of a four transmitter pilot specification for situations where there are four transmitters 212-218 and when two pilots are to be sent per transmitter. As shown in figure 2c, transmitter 212 transmits the values [+1 +1] in a first symbol in a first time period and the values [+1 -1] in a second symbol in a second time period. Similarly, transmitter 214 transmits the values [+1 +1] in the first symbol in the first time period and the values [-1 +1] in the second symbol in the second time period. Transmitter 216 transmits the values [+1 -1] in the first symbol in the first time period and the values [+1 +1] in the second symbol in a second time period. Transmitter 218 transmits the values [-1 +1] in the first symbol in the first time period and the values [+1 +1] in the second symbol in a second time period.

According to the embodiments in figures 2b and 2c, phase noise correction bandwidth for three and four transmitters is reduced only to ½ $T_{sym}$.

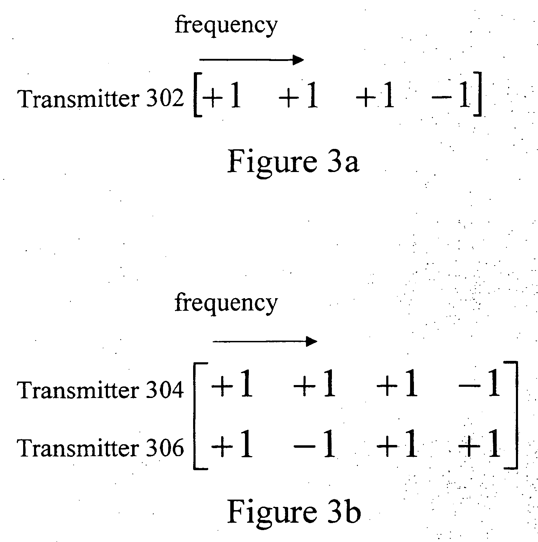

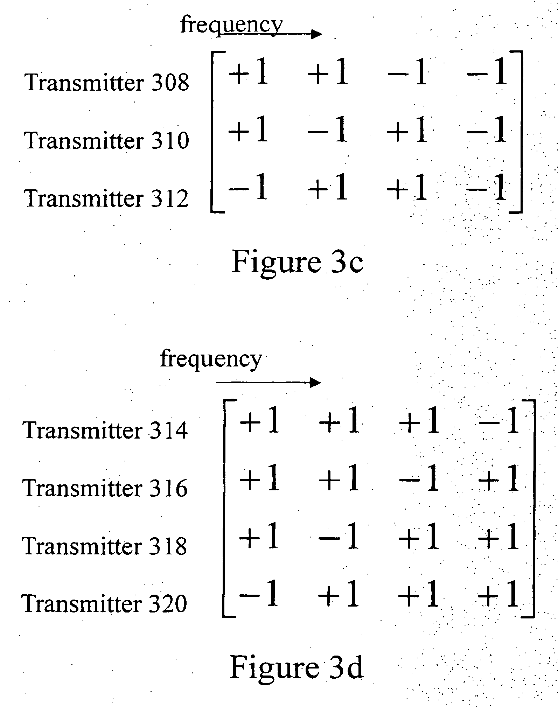

According to one embodiment of the invention, up to four pilots may be transmitted per antenna. Figure 3a illustrates the case when four pilots are to be transmitted for one transmitter 302. Figure 3b illustrates the case when four pilots are to be transmitted for two transmitters 304-306. Figure 3c illustrates the case when four pilots are to be transmitted for three transmitters 308-312. Figure 3d illustrates the case when four pilots are to be transmitted for four transmitters 314-320. According to figures 3a and 3d, the pilot sets from each of transmitters 302-320 are transmitted in one symbol over one time period. As such, the matrices of figures 3a-3d are for a single symbol. Furthermore, as illustrated in figure 3a and 3d, the columns of the matrices may be cycled over symbols for robustness across various channels.

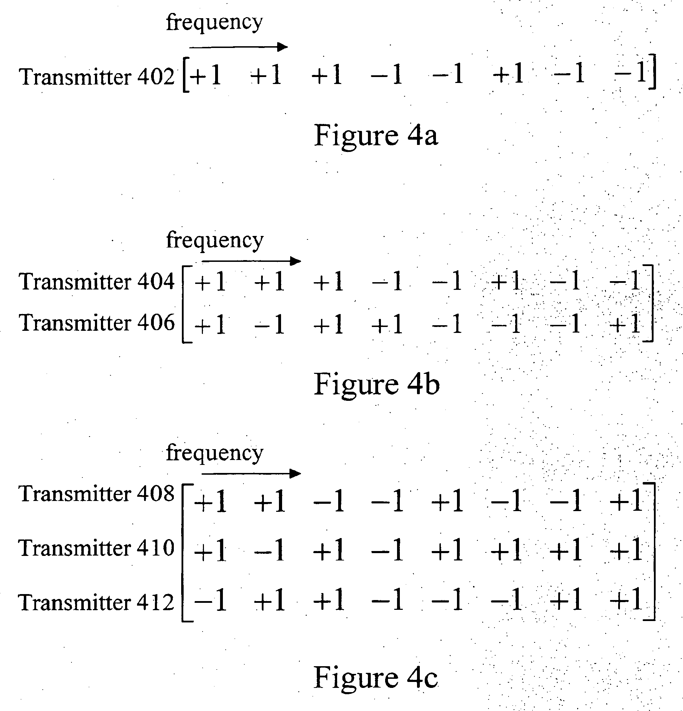

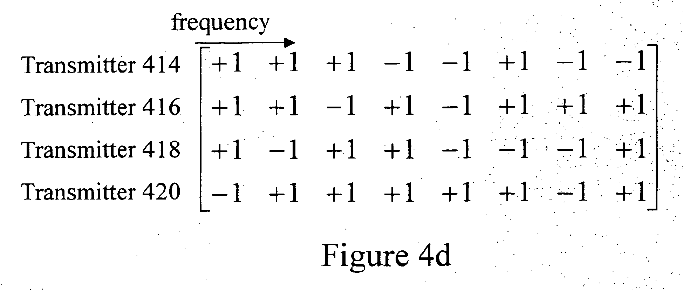

According to one embodiment of the invention, up to eight pilots may be transmitted per antenna. Figure 4a illustrates the case when eight pilots are to be transmitted for one transmitter 402. Figure 4b illustrates the case when eight pilots are to be transmitted for two transmitters 404-406. Figure 4c illustrates the case when eight pilots are to be transmitted for three transmitters 408-412. Figure 4d illustrates the case when eight pilots are to be transmitted for four transmitters 414-420. According to figures 4a and 4d, the pilot sets from each of transmitters 402-420 are transmitted in one symbol over one time period. As such, the matrices of figures 4a-4d are for a single symbol. Furthermore, as illustrated in figure 4a - 4d, the columns of the matrices may be cycled over symbols for robustness across various channels.

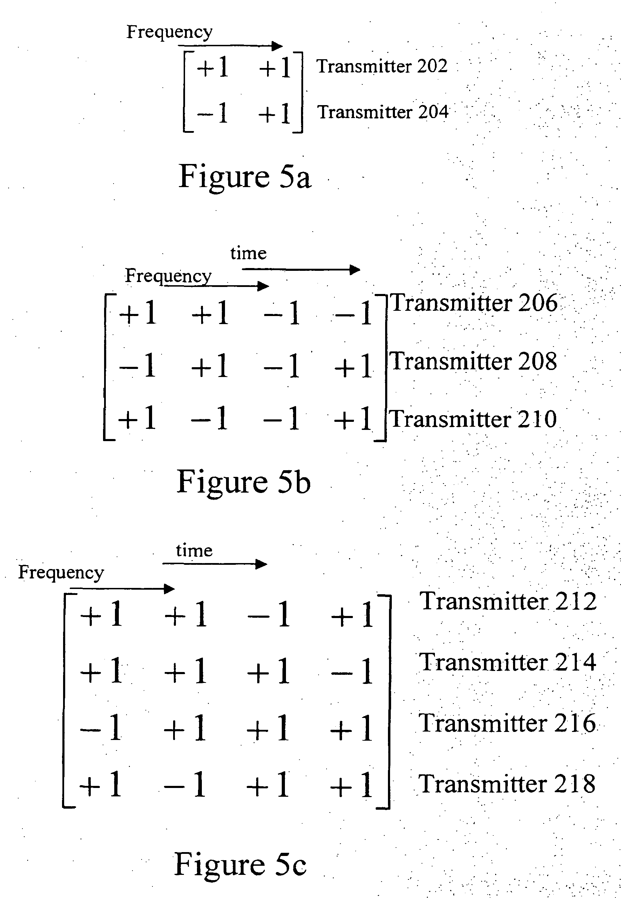

As shown below, the set of pilots for each transmitter may be rotated across pilot indices over time. Figures 5a-5c illustrates examples of matrices where the pilot sets are swapped to maintain robustness against variety of channels. To maintain robustness against a variety of channels, the pilot sets can be swapped every symbol for two transmitters or every pair of symbols for three-four transmitters.

Figure 5a illustrates a matrix where the pilot sets, shown in figure 2a, are swapped every symbol for two transmitters to maintain robustness. As such, transmitter 202 transmits the values [+1 +1] in a second symbol in one time period and transmitter 204 transmits the values [-1 +1] in the second symbol in one time period.

Figure 5b illustrates a matrix where the pilot sets, shown in figure 2b, are swapped every pair symbols for three transmitters to maintain robustness. Therefore, transmitter 206 transmits the values [+1 +1] in a third symbol in a first time period and the values [-1 -1] in a fourth symbol in a second time period. Similarly, transmitter 208 transmits the values [-1 +1] in the third symbol in the first time period and the values [-1 +1 in the fourth symbol in the second time period. Transmitter 210 transmits the values [+1 -1] in the third symbol in the first time period and the values [-1 +1 in the fourth symbol in a second time period.

Figure 5c illustrates a matrix where the pilot sets, as shown in figure 2c, are swapped every pair symbols for four transmitters to maintain robustness. In figure 5c, transmitter 212 transmits the values [+1 +1] in a third symbol in a first time period and the values [-1 +1] in a fourth symbol in a second time period. Similarly, transmitter 214 transmits the values [+1 +1] in the third symbol in the first time period and the values [+1 -1] in the fourth symbol in the second time period. Transmitter 216 transmits the values [-1 +1] in the third symbol in the first time period and the values [+1 +1] in the fourth symbol in a second time period. Transmitter 218 transmits the values [+1 -1] in the third symbol in the first time period and the values [+1 +1] in the fourth symbol in a second time period.

Additionally, utilizing rotation for various pilots at various time instances, the transmitters can properly identify various pilots. To clarify the issue regarding pilot set or pilot symbol rotation, an important aspect is that for any number of transmitters and any number of pilots, the pilot sets are rotated across the pilot indices; therefore, the first pilot set can become the second pilot set, the second pilot set can become the third pilot set, etc. In the case that multiple time instances are needed to transmit all pilot sets, the pilot set rotation occurs after each group of time instances. For example, if two time instances are needed to transmit a pilot set, then the pilot sets are rotated every two time instances.

It should be noted that, in one example of the invention, for a given pilot number, the pilot sets can contain at most one weighting which has an opposite (i.e. negative) polarity of the others. This technique can be applied when the number of transmitters is large, for example, larger than four. The pilot set rotation can be considered to be a layer on top of this weighting method, and could also be applied when the number of transmitters is large, such as larger than four. The invention, therefore, enables pilot signals to be effectively utilized in multiple transmitter configurations, providing additional flexibility with respect to coherent detection of errors. The inventive method of transmitting pilot symbols over multiple transit paths enable receivers to use the pilot symbols, as mentioned previously, to track changes in the channel, frequency changes, and/or phase changes. Utilizing the same pilot signals on all transmit paths eliminates this additional flexibility. By using a structure or specified pilot set as discussed above, the invention allows for channel, frequency, and/or phase tracking of multiple transmit signals.

The disclosed structure and/or weighting, combined with rotation of the pilot sets over time, provide a traceable interrelationship of pilot signals, while enabling tracking on the multiple transmit paths. In addition to the weighting discussed above, the specified pilot sets can be scaled by a complex value. The specified pilot sets can also be reordering, and/or permuting across transmitters and across pilot indices. Additionally, the specified pilot sets can be scaled by a complex value which varies and/or repeats over time. Moreover, the pilots within a pilot set can each be scaled by possible different complex values and the scaling can vary over time. It should be noted that the present invention provides for the use of any subset of the pilot sets illustrated in figures 2-5. For example, referring to figure 4d which deals with 8 pilots and 4 transmitters, if 6 pilots are to be used for 3 transmitters, one can create a pilot set matrix using rows marked 414,416,418 and the first, second, fourth, fifth, seventh, and eighth columns of the matrix, wherein the resulting 3x6 matrix would be:

$$\begin{bmatrix} +1 & +1 & -1 & -1 & -1 & -1 \\ +1 & +1 & +1 & -1 & +1 & +1 \\ +1 & -1 & +1 & -1 & -1 & +1 \end{bmatrix}$$

It should be appreciated by one skilled in art, that although examples of the present invention are described with respect to IEEE™ 802.1 1a and 802.11g, the inventive method may be utilized in any device that implements the OFDM encoding scheme. The foregoing description has been directed to specific embodiments of this invention. It will be apparent, however, that other variations and modifications may be made to the described embodiments, with the attainment of some or all of their advantages. Therefore; it is the object of the appended claims to cover all such variations and modifications as come within the scope of the invention.

**Claims**

1. A network device for transmitting a set of known pilot symbols in an OFDM radio communications system, the network device comprising:
generating means for generating at least two known pilot symbols to be transmitted for each of a plurality of transmit sources;
inserting means for inserting the pilot symbols into at least two sub-carriers for each of the plurality of transmit sources; and
creating means for creating a near to full orthogonal matrix over time and frequency using the at least two pilot symbols;
wherein a receiving station utilizes the pilot symbols for at least one of channel, frequency, phase tracking and identifying the transmit sources; **characterized in that** the creating means are configured such that the matrix provides for a first transmit source of the plurality of transmit sources, to simultaneously transmit in a first time period a pilot symbol of [+1] on a first subcarrier of the at least two subcarriers and a pilot symbol of [+1] on a second subcarrier of the at least two subcarriers, while a second transmit source of the plurality of transmit sources, to simultaneously transmit a pilot symbol of [+1] on the first subcarrier and a pilot symbol of [-1] on the second subcarrier and a third transmit source of the plurality of transmit sources, to simultaneously transmit a pilot symbol of [-1] on the first subcarrier and a pilot symbol of [+1] on the second subcarrier; and the first transmit source, to simultaneously transmit in a second time period a pilot symbol of [-1] on the first subcarrier and a pilot symbol of [-1] on the second subcarrier, while the second transmit source, to simultaneously transmit a pilot symbol of [+1] on the first subcarrier and a pilot symbol of [-1] on the second subcarrier and the third transmit source, to simultaneously transmit a pilot symbol of [+1] on the first subcarrier and a pilot symbol of [-1] on the second subcarrier.

2. The network device according to claim 1, wherein the inserting means inserts weighted pilot symbols for each of the plurality of transmit sources.

3. The network device of claim 1 wherein the pilot symbols transmitted by said plurality of transmit sources are transmitted repeatedly, and wherein the pilot signals are swapped between the transmitters.

4. A method for transmitting pilot symbols in an OFDM radio communications system, said system comprising a plurality of transmit sources, the method comprising the steps of:
generating at least two known pilot symbols to be transmitted for each of the plurality of transmit sources;

inserting pilot symbols into at least two sub-carriers for each of the plurality of transmit sources;
creating a near to full orthogonal matrix over time and frequency using a minimum number of pilot symbols; and
using the pilot symbols for at least one of channel, frequency, phase tracking and identifying the transmit sources at a receiving station; **characterized in that** the creating step is such that:

- in a first time period a first transmit source of the plurality of transmit sources transmits a pilot symbol of [+1] on a first subcarrier of the at least two subcarriers and a second subcarrier of the at least two subcarriers, while a second transmit source of the plurality of transmit sources transmits a pilot symbol of [+1] on the first subcarrier and a pilot symbol of [-1] on the second subcarrier and a third transmit source of the plurality of transmit sources transmits a pilot symbol of [-1] on the first subcarrier and a pilot symbol of [+1] on the second subcarrier, and wherein
- in a second time period the first transmit source transmits a pilot symbol of [-1] on the first and the second subcarriers while the second transmit source transmits a pilot symbol of [+1] on the first subcarrier and a pilot symbol of [-1] on the second subcarrier and the third transmit source simultaneously transmits a pilot symbol of [+1] on the first subcarrier and a pilot symbol of [-1] on the second subcarrier.

5. The method according to claim 4, wherein the step of inserting comprises inserting weighted pilot symbols for each of the plurality of transmit sources.

6. The method according to claim 4, wherein the at least two pilot symbols generated at the first transmitter differ by at least one symbol from the at least two pilot symbols generated at the second transmit source.

7. The method according to claim 4, wherein the pilot symbols transmitted by said first and second transmit sources are transmitted repeatedly, and wherein the pilot signals are swapped between the transmit sources.

**Patentansprüche**

1. Netzwerkvorrichtung zum Senden eines Satzes bekannter Pilotsymbole in einem OFDM Funkkommunikationssystem, wobei die Netzwerkvorrichtung aufweist:

eine Erzeugungseinrichtung zum Erzeugen von wenigstens zwei bekannten zu sendenden Pilotsymbolen für jede eine Vielzahl von Sendequellen;

eine Einfügeeinrichtung zum Einfügen der Pilotsymbole in wenigstens zwei Unterträger für jede der Vielzahl von Sendequellen; und

eine Erzeugungseinrichtung zum Erzeugen einer fast vollständigen orthogonalen Matrix über Zeit und Frequenz mittels der wenigstens zwei Pilotsymbole;

wobei eine Empfangsstation die Pilotsymbole für wenigstens eines verwendet von Kanal-, Frequenz-, Phasen-Verfolgung und - Identifizierung der Sendequellen;

**dadurch gekennzeichnet, dass**
die Erzeugungseinrichtung so konfiguriert ist, dass die Matrix für eine erste Sendequelle der Vielzahl von Sendequellen vorsieht, dass sie in einem ersten Zeitraum gleichzeitig ein Pilotsymbol [+1] auf einem ersten Unterträger der wenigstens zwei Unterträger und ein Pilotsymbol [+1] auf einem zweiten Unterträger der wenigstens zwei Unterträger sendet, während eine zweite Sendequelle der Vielzahl von Sendequellen gleichzeitig ein Pilotsymbol [+1] auf dem ersten Unterträger und ein Pilotsymbol [-1] auf dem zweiten Unterträger sendet, und eine dritte Sendequelle der Vielzahl von Sendequellen gleichzeitig ein Pilotsymbol [-1] auf dem ersten Unterträger und ein Pilotsymbol [+1] auf dem zweiten Unterträger sendet; und

die erste Sendequelle in einem zweiten Zeitraum gleichzeitig ein Pilotsymbol [-1] auf dem ersten Unterträger und ein Pilotsymbol [-1] auf dem zweiten Unterträger sendet, während die zweite Sendequelle gleichzeitig ein Pilotsymbol [+1] auf dem ersten Unterträger und ein Pilotsymbol [-1] auf dem zweiten Unterträger sendet, und die dritte Sendequelle gleichzeitig ein Pilotsymbol [+1] auf dem ersten Unterträger und ein Pilotsymbol [-1] auf dem zweiten Unterträger sendet.

2. Netzwerkvorrichtung nach Anspruch 1, wobei die Einfügeeinrichtung gewichtete Pilotsymbole für jede der Vielzahl von Sendequellen einfügt.

3. Netzwerkvorrichtung nach Anspruch 1, wobei die von der Vielzahl von Sendequellen gesendeten Pilotsymbole wiederholt gesendet werden, und wobei die Pilotsignale zwischen den Sendern ausgetauscht werden.

4. Verfahren zum Senden von Pilotsymbolen in einem OFDM Funkkommunikationssystem, wobei das System eine Vielzahl von Sendequellen aufweist, wobei das Verfahren die folgenden Schritte umfasst:

Erzeugen von wenigstens zwei bekannten zu sendenden Pilotsymbolen für jede der Vielzahl von Sendequellen;

Einfügen der Pilotsymbole in wenigstens zwei Unterträger für jede der Vielzahl von Sendequellen;

Erzeugen einer fast vollständigen orthogonalen Matrix über Zeit und Frequenz mittels einer minimalen Anzahl von Pilotsymbolen; und

Verwenden der Pilotsymbole für wenigstens eines von Kanal-, Frequenz-, Phasen-Verfolgung und -Identifizierung der Sendequellen an einer Empfangsstation;

**dadurch gekennzeichnet, dass**
der Schritt des Erzeugens derart ist, dass
in einem ersten Zeitraum eine erste Sendequelle der Vielzahl von Sendequellen ein Pilotsymbol [+1] auf einem ersten Unterträger der wenigstens zwei Unterträger und einem zweiten Unterträger der wenigstens zwei Unterträger sendet, während eine zweite Sendequelle der Vielzahl von Sendequellen ein Pilotsymbol [+1] auf dem ersten Unterträger und ein Pilotsymbol [-1] auf dem zweiten Unterträger sendet, und eine dritte Sendequelle der Vielzahl von Sendequellen ein Pilotsymbol [-1] auf dem ersten Unterträger und ein Pilotsymbol [+1] auf dem zweiten Unterträger sendet; und wobei

in einem zweiten Zeitraum die erste Sendequelle ein Pilotsymbol [-1] auf dem ersten Unterträger und dem zweiten Unterträger sendet, während die zweite Sendequelle ein Pilotsymbol [+1] auf dem ersten Unterträger und ein Pilotsymbol [-1] auf dem zweiten Unterträger sendet, und die dritte Sendequelle gleichzeitig ein Pilotsymbol [+1] auf dem ersten Unterträger und ein Pilotsymbol [-1] auf dem zweiten Unterträger sendet.

5. Verfahren nach Anspruch 4, wobei der Schritt des Einfügens das Einfügen gewichteter Pilotsymbole für jede der Vielzahl von Sendequellen umfasst.

6. Verfahren nach Anspruch 4, wobei die wenigstens zwei Pilotsymbole, die an dem ersten Sender erzeugt werden, sich um wenigstens ein Symbol von den wenigstens zwei Pilotsymbolen unterscheiden, die an der zweiten Sendequelle erzeugt werden.

7. Verfahren nach Anspruch 4, wobei die von der ersten und der zweiten Sendequelle gesendeten Pilotsymbole wiederholt gesendet werden, und wobei die Pilotsignale zwischen den Sendequellen ausgetauscht werden.

**Revendications**

1. Dispositif de réseau pour transmettre un ensemble de symboles pilotes connus dans un système de communications radio OFDM, le dispositif de réseau comprenant

un moyen de génération pour générer au moins deux symboles pilotes connus devant être transmis pour chacune d'une pluralité de sources de transmission ; un moyen d'insertion pour insérer les symboles pilotes dans au moins deux sous-porteuses pour chacune de la pluralité de sources de transmission ; et un moyen de création pour créer une matrice presque à totalement orthogonale sur le temps et la fréquence en utilisant les au moins deux symboles pilotes ;

dans lequel une station de réception utilise les symboles pilotes pour au moins un d'un suivi de canal, de fréquence et de phase et d'une identification des sources de transmission ; **caractérisé en ce que** le moyen de création est configuré de telle manière que la matrice prévoit pour une première source de transmission parmi la pluralité de sources de transmission de transmettre simultanément sur une première période de temps un symbole pilote de [+1] sur une première sous-porteuse parmi les au moins deux sous-porteuses et un symbole pilote de [+1] sur une deuxième sous-porteuse parmi les au moins deux sous-porteuses, tandis que pour une deuxième source de transmission parmi la pluralité de sources de transmission, de transmettre simultanément un symbole pilote de [+1] sur la première sous-porteuse et un symbole pilote de [-1] sur la deuxième sous-porteuse et pour une troisième source de transmission parmi la pluralité de sources de transmission, de transmettre simultanément un symbole pilote de [-1] sur la première sous-porteuse et un symbole pilote de [+1] sur la deuxième sous-porteuse ; et pour la première source de transmission, de transmettre simultanément sur une deuxième période de temps un symbole pilote de [-1] sur la première sous-porteuse et un symbole pilote de [-1] sur la deuxième sous-porteuse, tandis que pour la deuxième source de transmission, de transmettre simultanément un symbole pilote de [+1] sur la première sous-porteuse et un symbole pilote de [-1] sur la deuxième sous-porteuse et pour la troisième source de transmission, de transmettre simultanément un symbole pilote de [+1] sur la première sous-porteuse et un symbole pilote de [-1] sur la deuxième sous-porteuse.

2. Dispositif de réseau selon la revendication 1, dans lequel le moyen d'insertion insère des symboles pilotes pondérés pour chacune de la pluralité de sources de transmission.

3. Dispositif de réseau selon la revendication 1, dans lequel les symboles pilotes transmis par ladite pluralité de sources de transmission sont transmis de façon répétée, et dans lequel les signaux pilotes sont échangés entre les émetteurs.

4. Procédé de transmission de symboles pilotes dans un système de communications radio OFDM, ledit système comprenant une pluralité de sources de transmission, le procédé comprenant les étapes de :

génération d'au moins deux symboles pilotes connus devant être transmis pour chacune de la pluralité de sources de transmission ; insertion des symboles pilotes dans au moins deux sous-porteuses pour chacune de la pluralité de sources de transmission ; création d'une matrice presque à totalement orthogonale sur le temps et la fréquence en utilisant un nombre minimum de symboles pilotes ; et utilisation des symboles pilotes pour au moins un d'un suivi de canal, de fréquence et de phase et d'une identification des sources de transmission au niveau d'une station de réception ; **caractérisé en ce que** l'étape de création est telle que

- sur une première période de temps, une première source de transmission parmi la pluralité de sources de transmission transmet un symbole pilote de [+1] sur une première sous-porteuse parmi les au moins deux sous-porteuses et une deuxième sous-porteuse parmi les au moins deux sous-porteuses, tandis qu'une deuxième source de transmission parmi la pluralité de sources de transmission transmet un symbole pilote de [+1] sur la première sous-porteuse et un symbole pilote de [-1] sur la deuxième sous-porteuse et une troisième source de transmission parmi la pluralité de sources de transmission transmet un symbole pilote de [-1] sur la première sous-porteuse et un symbole pilote de [+1] sur la deuxième sous-porteuse, et dans lequel
- sur une deuxième période de temps, la première source de transmission transmet un symbole pilote de [-1] sur la première et la deuxième sous-porteuse, tandis que la deuxième source de transmission transmet un symbole pilote de [+1] sur la première sous-porteuse et un symbole pilote de [-1] sur la deuxième sous-porteuse, et la troisième source de transmission transmet simultanément un symbole pilote de [+1] sur la première sous-porteuse et un symbole pilote de [-1] sur la deuxième sous-porteuse.

5. Procédé selon la revendication 4, dans lequel l'étape d'insertion comprend l'insertion de symboles pilotes pondérés pour chacune de la pluralité de sources de transmission.

**6.** Procédé selon la revendication 4, dans lequel les au moins deux symboles pilotes générés au niveau du premier émetteur diffèrent d'au moins un symbole par rapport aux au moins deux symboles pilotes générés au niveau de la deuxième source de transmission.

**7.** Procédé selon la revendication 4, dans lequel les symboles pilotes transmis par lesdites première et deuxième sources de transmission sont transmis de façon répétée, et dans lequel les signaux pilotes sont échangés entre les sources de transmission.

Figure 1

$$\begin{bmatrix} p_1 & p_2 \end{bmatrix} = \begin{bmatrix} +1 & +1 \\ +1 & -1 \end{bmatrix} \begin{matrix} \text{Transmitter 202} \\ \text{Transmitter 204} \end{matrix}$$

frequency →

## Figure 2a

$$\begin{bmatrix} p_1 & p_2 & p_3 & p_4 \end{bmatrix} = \begin{bmatrix} +1 & +1 & -1 & -1 \\ +1 & -1 & +1 & -1 \\ -1 & +1 & +1 & -1 \end{bmatrix} \begin{matrix} \text{Transmitter 206} \\ \text{Transmitter 208} \\ \text{Transmitter 210} \end{matrix}$$

time →
frequency →

## Figure 2b

$$\begin{bmatrix} p_1 & p_2 & p_3 & p_4 \end{bmatrix} = \begin{bmatrix} +1 & +1 & +1 & -1 \\ +1 & +1 & -1 & +1 \\ +1 & -1 & +1 & +1 \\ -1 & +1 & +1 & +1 \end{bmatrix} \begin{matrix} \text{Transmitter 212} \\ \text{Transmitter 214} \\ \text{Transmitter 216} \\ \text{Transmitter 218} \end{matrix}$$

Time →
frequency →

## Figure 2c

frequency

$\longrightarrow$

Transmitter 302 $\begin{bmatrix} +1 & +1 & +1 & -1 \end{bmatrix}$

Figure 3a

frequency

$\longrightarrow$

Transmitter 304

Transmitter 306 $\begin{bmatrix} +1 & +1 & +1 & -1 \\ +1 & -1 & +1 & +1 \end{bmatrix}$

Figure 3b

frequency →

Transmitter 308

Transmitter 310

Transmitter 312

$$\begin{bmatrix} +1 & +1 & -1 & -1 \\ +1 & -1 & +1 & -1 \\ -1 & +1 & +1 & -1 \end{bmatrix}$$

Figure 3c

frequency →

Transmitter 314

Transmitter 316

Transmitter 318

Transmitter 320

$$\begin{bmatrix} +1 & +1 & +1 & -1 \\ +1 & +1 & -1 & +1 \\ +1 & -1 & +1 & +1 \\ -1 & +1 & +1 & +1 \end{bmatrix}$$

Figure 3d

frequency

Transmitter 402 $\begin{bmatrix} +1 & +1 & +1 & -1 & -1 & +1 & -1 & -1 \end{bmatrix}$

## Figure 4a

frequency

Transmitter 404 $\begin{bmatrix} +1 & +1 & +1 & -1 & -1 & +1 & -1 & -1 \\ +1 & -1 & +1 & +1 & -1 & -1 & -1 & +1 \end{bmatrix}$
Transmitter 406

## Figure 4b

frequency

Transmitter 408 $\begin{bmatrix} +1 & +1 & -1 & -1 & +1 & -1 & -1 & +1 \\ +1 & -1 & +1 & -1 & +1 & +1 & +1 & +1 \\ -1 & +1 & +1 & -1 & -1 & -1 & +1 & +1 \end{bmatrix}$
Transmitter 410
Transmitter 412

## Figure 4c

frequency

$$
\begin{array}{l}
\text{Transmitter 414} \\
\text{Transmitter 416} \\
\text{Transmitter 418} \\
\text{Transmitter 420}
\end{array}
\begin{bmatrix}
+1 & +1 & +1 & -1 & -1 & +1 & -1 & -1 \\
+1 & +1 & -1 & +1 & -1 & +1 & +1 & +1 \\
+1 & -1 & +1 & +1 & -1 & -1 & -1 & +1 \\
-1 & +1 & +1 & +1 & +1 & +1 & -1 & +1
\end{bmatrix}
$$

# Figure 4d

Frequency →

$$\begin{bmatrix} +1 & +1 \\ -1 & +1 \end{bmatrix}$$ Transmitter 202
Transmitter 204

## Figure 5a

time →
Frequency →

$$\begin{bmatrix} +1 & +1 & -1 & -1 \\ -1 & +1 & -1 & +1 \\ +1 & -1 & -1 & +1 \end{bmatrix}$$ Transmitter 206
Transmitter 208
Transmitter 210

## Figure 5b

time →
Frequency →

$$\begin{bmatrix} +1 & +1 & -1 & +1 \\ +1 & +1 & +1 & -1 \\ -1 & +1 & +1 & +1 \\ +1 & -1 & +1 & +1 \end{bmatrix}$$ Transmitter 212
Transmitter 214
Transmitter 216
Transmitter 218

## Figure 5c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BARRY J R et al.** Broadband MIMO-OFDM Wireless Communications. *PROCEEDINGS OF THE IEEE, IEEE. NEW YORK, US,* 01 February 2004, vol. 92 (2), ISBN 0018-9219, 271-294